# EUROPÄISCHE PATENTSCHRIFT

(11) **EP 4 295 190 B1**
(45) Veröffentlichungstag und Bekanntmachung des Hinweises auf die Patenterteilung: **29.10.2025**
(21) Anmeldenummer: 22710522.8
(22) Anmeldetag: 17.02.2022
(51) Int. Cl.: G02B 23/24, G01N 21/954, G01M 15/14

(54) **ZENTRIERUNGSHILFE FÜR BOROSKOPE**
CENTERING AID FOR BORESCOPES
DISPOSITIF D'AIDE AU CENTRAGE POUR BOROSCOPE

(30) Priorität: 17.02.2021 DE 102021103749
(43) Veröffentlichungstag der Anmeldung: 27.12.2023
(73) Patentinhaber: Lufthansa Technik AG, 22335 Hamburg (DE)
(72) Erfinder: PETERS, Jan Oke, 22339 Hamburg (DE); THIES, Michael, 22395 Hamburg (DE); TEWES, Matthias, 22305 Hamburg (DE); HÖFENER, Matthias, 22087 Hamburg (DE); BECHHEIM, Lukas, 22083 Hamburg (DE)
(74) Vertreter: Glawe, Delfs, Moll
(86) Internationale Anmeldenummer: PCT/EP2022/053929
(87) Internationale Veröffentlichungsnummer: WO 2022/175382

(56) Entgegenhaltungen:
- EP-A1- 3 422 510
- JP-A- 2012 141 419
- US-A- 5 365 331

## Beschreibung

Die Erfindung betrifft eine Zentrierungshilfe für Boroskope sowie eine Anordnung umfassend eine solche Zentrierungshilfe und ein Boroskop.

Im Stand der Technik sind diverse Verfahren zur optischen Inspektion von technischen Geräten, wie bspw. Gasturbinen bzw. Flugzeugtriebwerken, bekannt, bei denen ein Boroskop durch eine seitliche Öffnung in ein vollständig montiertes technisches Gerät eingeführt wird, um damit dann das Innere des Gerätes optisch inspizieren zu können.

Beispielsweise wird zur Inspektion der Brennkammer einer Gasturbine ein flexibles Boroskop eingeführt und solange bei kontinuierlicher Bilderfassung manuell bewegt, bis die Brennkammer vollständig aufgenommen ist, also für jeden Bereich der Brennkammer wenigstens ein Bild erfasst wurde. So wird häufig ein flexibles Boroskop entlang des kompletten Innenumfangs einer Brennkammer geführt, bevor er anschließend langsam herausgezogen wird. Dadurch soll sichergestellt werden, dass die Brennkammer über ihren kompletten Umfang befundet wird.

Bei einer solchen Befundung der Brennkammer liegen das Boroskop und insbesondere die Bilderfassungssonde am freien Ende des Boroskops an einer der Innenwände der Brennkammer an oder hängt freischwingend in der Brennkammer, wobei sich je nach Position der Bilderfassungssonde entlang des Umfangs individuelle und regelmäßig nicht reproduzierbare Winkel und Abstände der Sonde gegenüber dem zu erfassenden Bereich der Brennkammer einstellen.

Darüber hinaus ist die Position der Bilderfassungssonde anfällig für Relativbewegungen gegenüber der Brennkammer, sofern Schwingungen des Triebwerks oder des gesamten Flugzeugs - bspw. aufgrund von Windeinwirkungen oder anderen Wartungsarbeiten am Flugzeug - auftreten. Um dennoch scharfe Bilder erfassen zu können, ist die Belichtungszeit der Sonde entsprechend gering zu wählen, was sich jedoch negativ auf die Bildqualität auswirkt.

Im Ergebnis ist es mit dem aus dem Stand der Technik bekannten Boroskopieverfahren praktisch nicht möglich, eine gleichbleibende Qualität der vom Innern einer Brennkammer erfassten Bilder, insbesondere von Schadensbildern, zu erreichen. Außerdem können mit einem solchen Verfahren - insbesondere aufgrund der nicht vermeidbaren Relativbewegungen der Sonde gegenüber der Brennkammer - keine 3-D-Scans angefertigt werden. Vielmehr muss bei Bedarf nachträglich eine manuelle 3-D-Erfassung mit gesonderten dafür geeigneten 3-D-Boroskopen durchgeführt werden.

Vergleichbares gilt auch für die Boroskopie einer Vielzahl anderer technischer Geräte.

Das Dokument JP 2012 141419 A betrifft ein Endoskop mit einer Zentrierhilfe, die einen flexiblen Zentralkörper zur Aufnahme eines Endoskopschafts sowie eine sich in radialer Richtung variabel erstreckende Abstandshaltervorrichtung umfasst. Die Abstandshaltervorrichtung kann dabei unterschiedlich ausgestaltet sein. Beschrieben wird eine Abstandshaltervorrichtung in Form von zwei in Längsrichtung hintereinander angeordneten verformbaren Streifenanordnungen mit jeweils sechs Streifen, deren radiale Erstreckung durch eine mittels Druckausübung auf den verschiebbaren Mantel bewirkte Verschiebung von Führungsteilen der Streifenanordnungen einstellbar ist, eine Ausgestaltung mit radial nach außen ragenden Elementen und eine Ausgestaltung mit einem radial expandierbaren Luftballon.

Das Dokument US 5 365 331 A beschreibt eine Zentrierhilfe für ein Boroskop, bei der eine zweiteilige Abstandshaltervorrichtung mit streifenförmigen Drahtfedern vorgesehen ist. Die Drahtfedern können dabei in Längsrichtung auf dem Boroskopschaft entlanggleiten, sodass ihre radiale Erstreckung je nach radial von außen ausgeübtem Druck veränderlich ist.

In dem Dokument EP 3 422 510 A1 wird eine Vorrichtung zur Leitungszentrierung in einer rotierenden Welle behandelt. Die Vorrichtung umfasst ein Rohr, an dessen Außenseite in Längs- und Umfangsrichtung verteilt Borstenbüschel angeordnet sind.

Der Erfindung liegt die Aufgabe zugrunde, eine Vorrichtung für Boroskope bzw. eine Boroskopanordnung zu schaffen, mit der die aus dem Stand der Technik bekannten Nachteile zumindest reduziert werden können.

Gelöst wird diese Aufgabe durch eine Zentrierungshilfe für Boroskope gemäß dem Hauptanspruch sowie eine Anordnung aus einer solchen Zentrierungshilfe und einem Boroskop gemäß dem nebengeordneten Anspruch. Vorteilhafte Weiterbildungen sind Gegenstand der abhängigen Ansprüche.

Demnach betrifft die Erfindung eine Zentrierungshilfe für Boroskope umfassend einen lang gestreckten einteiligen oder mehrteiligen Zentralkörper mit einem Durchführungskanal für Boroskopleitungen und einer sich über den gesamten Umfang des Zentralkörpers in radialer Richtung variabel erstreckenden Abstandshaltervorrichtung zur Abstützung des Zentralkörpers in wenigstens zwei entlang des Zentralkörpers voneinander beabstandeten, jeweils senkrecht zur Längsrichtung des Zentralkörpers verlaufenden Abstützebenen, wobei die Abstandshaltervorrichtung über den Umfang des Zentralkörpers verteilt sich in radialer Richtung variabel erstreckbare Komponenten aufweist, wobei die Komponenten an zwei in Längsrichtung des Zentralkörpers beabstandeten Führungspunkten geführte Streifen wenigstens zweier in Längsrichtung des Zentralkörpers versetzt angeordneter Sätze von jeweils wenigstens drei über den Umfang verteilte elastisch verformbare Streifen sind, die durch Änderung des Verhältnisses aus dem Abstand zwischen ihren jeweiligen beiden Führungspunkten und ihrer jeweiligen Länge zwischen den beiden Führungspunkten in radialer Richtung nach außen expandierbar sind und der Abstand zwischen zwei Teilen des Zentralkörpers durch Bowdenzüge veränderbar ist, oder wobei die Komponenten flexible, zumindest teilweise federnd am Zentralkörper gelagerte und um eine Achse senkrecht zur Längsrichtung des Zentralkörpers verschwenkbare Borsten sind.

Weiterhin betrifft die Erfindung eine Anordnung umfassend ein Boroskop mit einem Boroskopkopf an einem Ende eines Boroskopschafts, in dem Boroskopleitungen verlaufen, und eine unmittelbar benachbart zum Boroskopkopf angeordnete Zentrierungshilfe mit einem Durchführungskanal, durch den die Boroskopleitungen geführt sind, wobei die Zentrierungshilfe erfindungsgemäß ausgebildet ist oder ausgebildet ist mit einem lang gestreckten Zentralkörper umfassend den Durchführungskanal, wobei der Zentralkörper eine sich über den gesamten Umfang des Zentralkörpers in radialer Richtung variabel erstreckende Abstandshaltervorrichtung zur Abstützung des Zentralkörpers in wenigstens zwei entlang des Zentralkörpers voneinander beabstandeten, jeweils senkrecht zur Längsrichtung des Zentralkörpers verlaufenden Abstützebenen umfasst, wobei die Abstandshaltervorrichtung wenigstens ein an dem Zentralkörper angeordnetes, sich in Längsrichtung des Zentralkörpers erstreckendes Luftkissen umfasst, welches über eine Druckluftzufuhr wahlweise aufblasbar und entlüftbar ist, und wobei der Boroskopschaft durch den Durchführungskanal der Zentrierungshilfe geführt ist und der Querschnitt des Zentralkörpers senkrecht zum Durchführungskanal kleiner gleich dem Querschnitt des Boroskopkopfes ist.

Zunächst werden einige in Zusammenhang mit der Erfindung verwendete Begriffe erläutert.

Bei dem "Boroskopkopf" handelt es sich um denjenigen Teil eines Boroskops und/oder diejenigen Komponenten am freien Ende des Boroskops, die in den zu untersuchenden Gegenstand eingeführt werden und letztendlich den Aufnahmebereich des Boroskops bestimmen. Bei einem rein optischen Boroskop entspricht dies bspw. dem Boroskopobjektiv oder der Eintrittsfläche eines Lichtleiters, welcher den letztendlichen Aufnahmekegel definiert; bei einem Video-Boroskop ist dies der Aufnahmebereich der dafür vorgesehenen Bilderfassungssensoren. Dabei ist unerheblich, ob über den Boroskopkopf eine 2D-Bilderfassung im sichtbaren Bereich, Aufnahmen im nicht-sichtbaren Bereich (bspw. Infrarotbereich) und/oder die Erfassung von 3-D-Daten, bspw. per Triangulation, erfolgen. Der Boroskopkopf kann auch noch weitere Komponenten aufweisen, wie bspw. zusätzliche Sensoren, Lichtquellen oder Antriebe zur Ausrichtung der Bilderfassungssensoren.

Der Boroskopkopf kann grundsätzlich auf einem starren oder flexiblen "Boroskopschaft" angeordnet sein. Der Schaft dient dabei in erster Linie der Führung des Boroskopkopfes. Gleichzeitig verlaufen in dem Boroskopschaft die "Boroskopleitungen". Je nach Ausgestaltung des Boroskopkopfes umfassen die Boroskopleitungen elektrische Leitungen zur Stromversorgung von und/oder Datenkommunikation mit den Komponenten des Boroskopkopfes, und/oder Lichtwellenleiter. Unabhängig von der letztendlichen Übertragungstechnik werden über die Boroskopleitungen die am Boroskopkopf erfassten Bilder zum anderen Ende des Boroskopschaftes übermittelt, um dort zur Anzeige gebracht, gespeichert und/oder weiterverarbeitet zu werden.

Aus Gründen der besseren Verständlichkeit und Übersichtlichkeit wird nachfolgend in Zusammenhang mit vorteilhaften Ausführungsformen der Erfindung von "Luftkissen" und "Druckluft" gesprochen. Es lassen sich aber auch beliebige andere Gase als Luft für die Befüllung der Luftkissen verwenden, sodass die genannten sowie davon abgeleiteten Begriffe nicht auf Luft als Druck- bzw. Befüllungsgas für das Luftkissen beschränkt verstanden werden sollen.

Die Erfindung hat erkannt, dass bei einem durch eine kleine Öffnung, wie bspw. eine zum Zwecke der Boroskopie oder aus anderen Gründen vorgesehene Bohrung, in einen technischen Gegenstand, wie bspw. ein Flugzeugtriebwerk, eingeführtes Boroskop der Boroskopkopf im letztendlich zu inspizierenden Innenraum des Gegenstandes regelmäßig ohne seitliche Führung ist. Ist aber benachbart zu einem Boroskopkopf die erfindungsgemäße Zentrierungshilfe vorgesehen, kann eine seitliche Abstützung des Boroskopkopfes in zu inspizierenden Innenräumen erfolgen, selbst wenn diese deutlich größer sein sollten als der Querschnitt des Boroskopkopfes. Da die Abstandhaltervorrichtung in radialer Richtung variabel erstreckend ist, kann ein mit erfindungsgemäßer Zentrierungshilfe ausgestattetes Boroskop weiterhin durch gewöhnliche, für die Boroskopie geeignete und/oder vorgesehene Öffnungen in einen technischen Gegenstand eingeführt werden, in dem die radiale Erstreckung der Abstandhaltervorrichtung entsprechend reduziert wird. Zur letztendlichen Abstützung des Boroskopkopfes im Innern des technischen Gegenstandes wird dann die radiale Erstreckung der Abstandshaltervorrichtung vergrößert, bis diese an der Innenwand des Innenraums anliegt und den Boroskopkopf so gegenüber der Innenwand abstützt. Da dabei die Abstützung grundsätzlich in wenigsten zwei entlang des Zentralkörpers voneinander beabstandeten Ebenen erfolgen kann, wird regelmäßig auch die Ausrichtung des Boroskopkopfes durch die Abstandshaltervorrichtung festgelegt werden.

Die variable Erstreckung der Abstandshaltervorrichtung in radialer Richtung kann durch elastische Verformbarkeit von wenigstens einer sich radial erstreckenden Komponente der Abstandshaltervorrichtung und/oder durch wenigstens eine in radialer Richtung steuerbar nach außen expandierbare Komponente sichergestellt werden.

In einer erfindungsgemäßen Ausführungsvariante umfasst die Abstandshaltervorrichtung wenigstens zwei in Längsrichtung des Zentralkörpers versetzt angeordnete Sätze von jeweils wenigstens drei - vorzugsweise jeweils vier - über den Umfang des Zentralkörpers verteilte elastisch verformbare Streifen aufweist, wobei jeder der Streifen an zwei in Längsrichtung des Zentralkörpers beabstandeten Führungspunkten geführt ist und jeder Streifen durch Änderung des Verhältnisses aus dem Abstand zwischen seinen beiden Führungspunkten und der Länge des Streifens zwischen den beiden Führungspunkten in radialer Richtung nach außen expandierbar ist. Die Expansion kann dabei durch seitliches Ausweichen der Streifen aufgrund axialer Druckbeanspruchung (also: elastisches Biegeknicken), insbesondere vergleichbar zu einem der eulerschen Knickfälle 2 bis 4, erfolgen, wobei diese aufgrund des Zentralkörpers oder einer durch dessen Durchführungskanal geführte Boroskopleitung grundsätzlich nicht in Richtung des Zentralkörpers, sondern nur weg davon bzw. nach Außen erfolgen kann. Die Streifen können dabei grundsätzlich beliebig ausgestaltet sein und insbesondere einen beliebigen Querschnitt aufweisen. Um ein seitliches Ausweichen der nach außen expandierten Streifen zu vermeiden oder zumindest zu verringern, ist es aber bevorzugt, wenn die Streifen einen im wesentlich rechteckigen Querschnitt aufweisen, wobei die geringere Seitenlänge in radialer Richtung des Zentralkörpers verläuft. Durch die entsprechende Wahl des Querschnitts ist sichergestellt, dass die Expansion nach Außen der einzelnen Streifen im Wesentlichen in radialer Richtung erfolgt.

Indem wenigstens zwei in Längsrichtung des Zentralkörpers versetzt angeordnete Sätze vorgesehen sind, kann grundsätzlich eine Abstützung durch die Streifen in wenigstens zwei Abstützebenen erfolgen, wobei in der Regel jeder der Sätze jeweils eine der Abstützebenen definiert. Die wenigstens zwei Sätze können dabei in Längsrichtung des Zentralkörpers überschneiden angeordnet sein. Es ist aber auch möglich, dass die wenigstens zwei Sätze in Längsrichtung des Zentralkörpers vollständig hintereinander angeordnet sind.

Grundsätzlich ist es möglich, das Verhältnis aus dem Abstand zwischen seinen beiden Führungspunkten und der Länge des Streifens zwischen den beiden Führungspunkten durch Veränderung der fraglichen Länge zu verändern. Dazu kann ein Streifen bspw. an dem ersten Führungspunkt befestigt und am anderen Führungspunkt lediglich derart in Längsrichtung geführt sein, dass bei Hineinschieben eines über den Führungspunkt hinausragenden Teils des Streifens die Länge des Streifens zwischen den beiden Führungspunkten erhöht wird, womit der Streifen sich nach außen wölbt bzw. nach außen expandiert.

Es ist aber bevorzugt, wenigstens ein Streifen durch Veränderung des Abstandes zwischen den beiden Führungspunkten bei gleichbleibender Länge des Streifens zwischen den Führungspunkten in radialer Richtung nach außen expandierbar ist. Wird der fragliche Abstand derart reduziert, dass sie geringer ist als die Länge des Streifens, expandiert dieser nach Außen und kann so der Abstützung dienen. Um den Abstand zwischen zwei Führungspunkten eines Streifens verändern zu können, kann vorgesehen sein, dass der Zentralkörper in wenigstens zwei Teile unterteilt ist, wobei der Abstand zwischen wenigstens zwei Teilen des Zentralkörpers entlang einer durch den Durchführungskanal geführten Boroskopleitung veränderbar ist, und wenigstens ein Streifen fest an jeweils einem Führungspunkt auf jeweils einem der beiden Teile des Zentralkörpers angebunden ist.

Dabei ist besonders bevorzugt, wenn die Streifen eines Satzes an ihrem jeweils ersten Führungspunkt an einem ersten gemeinsamen Teil des Zentralkörpers und an ihrem jeweils anderen Führungspunkt an einem zweiten gemeinsamen Teil des Zentralkörpers befestigt sind, wobei der erste Teil des Zentralkörpers axial unverschieblich an einer durch den Durchführungskanal eingeführten Boroskopleitung befestigbar ist und der zweite Teil des Zentralkörpers axial verschieblich an einer durch den Durchführungskanal eingeführten Boroskopleitung ausgebildet ist. Es ist aber auch möglich, dass sowohl der erste als auch der zweite Teil des Zentralkörpers für wenigstens einen Satz grundsätzlich axial verschieblich sind, wobei die Verschiebbarkeit wenigstens eines der beiden Teile durch andere Komponenten der Abstandshaltervorrichtung oder Drittkomponenten begrenzt sein kann.

Sind die Sätze in Längsrichtung des Zentralkörpers vollständig hintereinander angeordnet, ist es bevorzugt, wenn die Streifen der einzelnen Sätze an ihren Führungspunkten jeweils an separaten Teilen des Zentralkörpers befestigt sind. Die beiden Sätze können zusammen mit den jeweiligen Teilen des Zentralkörpers zueinander identisch aufgebaut sein, sodass die letztendliche Abstandshaltervorrichtung letztendlich aus zwei entlang der Boroskopleitung hintereinander angeordneter, baugleicher Baugruppen bzw. Bauteilen gebildet wird. Die Abstandshaltervorrichtung lässt sich so auch beliebige auf drei oder mehr Sätze von Streifen erweitern. Durch identische Baugruppen bzw. Bauteile wird die Fertigung erleichtert.

Insbesondere wenn neben einer oder mehrerer Boroskopleitung(en) auch der Boroskopschaft durch den Zentralkörper geführt ist, kann wenigstens einer der Teile des Zentralkörpers auf dem Boroskopschaft gleitend ausgebildet sein. Insbesondere im Falle einer Anordnung von Sätzen an Streifen in Längsrichtung des Zentralkörpers hintereinander kann es sogar vorteilhaft sein, wenn alle Teile des Zentralkörpers bis auf einen auf dem Boroskopschaft gleitend ausgebildet sind: Durch Verschieben des von dem nicht-gleitenden Teil des Zentralkörpers am weitesten entferntesten Teil des Zentralkörpers ergibt sich das beschriebene Expandieren der Streifen nach Außen grundsätzlich bei allen Sätzen, wobei zwischen den genannten äußeren Teilen liegende weitere, gleitend ausgebildeten Teile des Zentralkörpers aufgrund der Anbindung an die elastisch verformbaren Streifen bei Verringerung des Abstandes zwischen den beiden äußeren Teilen derart "mitverschoben" werden können, dass sich die Abstände zwischen den beiden Führungspunkten bei allen Streifen verringert.

Unabhängig davon können die einzelnen Sätze der Abstandshaltervorrichtung jeweils separate erste und zweite Teile des Zentralkörpers aufweisen. Dadurch ist es grundsätzlich möglich, die Abstände zwischen den ersten und weiten Teilen für jeden Satz individuell verändern zu können. Es ist aber auch möglich, dass die ersten und/oder zweiten Teile des Zentralkörpers verschiedener Sätze jeweils einteilig ausgebildet sind. In anderen Worten können die Führungspunkte der Streifen zweier unterschiedlicher Sätze auch an einem oder sogar an beiden Enden an jeweils gemeinsamen Teil des Zentralkörpers befestigt sein. Um insbesondere im letztgenannten Fall die ggf. gewünschte in Längsrichtung des Zentralkörpers versetzte Anordnung der Sätze zu erreichen, können die Führungspunkte der unterschiedlichen Sätze entsprechend versetzt angeordnet sein.

Alternativ oder zusätzlich können Abstandselemente zur Festlegung des minimalen Abstands einzelner Teile des Zentralkörpers zueinander vorgesehen sein. Dabei können Abstandshalter zwischen Teilen des Zentralkörpers, an denen jeweils Führungspunkte von Streifen unterschiedlicher Sätze angeordnet sind, u. a. dazu dienen, die Abstützebenen voneinander beabstandet zu halten. Mit geeigneten Abstandshaltern zwischen Teilen des Zentralkörpers, deren Abstand zueinander grundsätzlich veränderbar ist, kann verhindert werden, dass der Abstand zwischen den Führungspunkten einzelner oder aller Streifen einzelner oder aller Sätze derart gering wird, dass sich die Streifen in sich verdrillen.

In einer erfindungsgemäßen Ausführungsvariante ist der Abstand zwischen zwei Teilen des Zentralkörpers durch einen oder mehrere Bowdenzüge veränderbar. Der oder die Bowdenzüge können entlang des Borokopschafts geführt sein und gestatten so eine Veränderung des besagten Abstands von einer entfernten Position. Es ist dabei besonders bevorzugt, wenn wenigstens zwei über den Umfang verteilte, individuell betätigbare Bowdenzüge zur Veränderung des Abstands zwischen zwei Teilen des Zentralkörpers vorgesehen sind. Insbesondere wenn die durch den Zentralkörper geführten Boroskopleitung(en) oder ein hindurchgeführter Boroskopschaft elastisch biegeverformbar sind, kann durch individuelle Betätigung der Bodenzüge nicht nur der Abstand zwischen zwei Teilen des Zentralkörpers verändert, sondern regelmäßig auch eine Biegung des Boroskops im Bereich zwischen den beiden Teilen des Zentralkörpers erreicht werden. Dadurch kann die Ausrichtung des Boroskopkopfes verändert werden. Die Rückstellkraft der Streifen nach erfolgter Veränderung des Abstands zwischen den Teilen des Zentralkörpers ist vorzugsweise ausreichend, den initialen Abstand zwischen den Teilen des Zentralkörpers wieder herzustellen, wenn die für die Veränderung des Abstands verwendeten Bowdenzüge vollständig entlastet werden.

Die Streifen und der Zentralkörper können aus Kunststoff gefertigt sein. Dabei ist es möglich und sogar bevorzugt, die Streifen an wenigstens einem Teil der Führungspunkte einstückig mit dem Zentralkörper bzw. dem jeweiligen Teil des Zentralköpers, an dem die Führungspunkte angeordnet ist, auszubilden. Es ergibt sich dann eine feste Verbindung zwischen Zentralkörper und Streifen, die in der Regel als feste Einspannung angesehen werden kann. Die Streifen weisen im entspannten Zustand gegenüber dem Zentralkörper vorzugsweise eine leichte Wölbung nach außen hin auf, sodass jegliche Veränderung des Verhältnisses aus dem Abstand zwischen seinen beiden Führungspunkten und der Länge des Streifens unmittelbar zu einem Biegeknicken des Streifens führt.

Für die vorstehend erläuterte Ausführungsvariante der Abstandshaltervorrichtung sind Anwendungsfälle denkbar, bei denen ein Satz an Streifen ausreichend ist, um eine ausreichende Abstützung zu gewährleisten. Dabei können durch eine besondere Formgebung und/oder Biegesteifigkeitsverteilung der Streifen des Satzes unmittelbar zwei Abstützebenen geschaffen werden. Je nach Ausgestaltung des Boroskops, mit dem die Abstandshaltervariante verwendet wird, und/oder konkretem Anwendungsfall kann es aber auch ausreichen, wenn nur ein Satz an Streifen mit grundsätzlich auch nur eine Abstützebene vorgesehen ist. Entsprechende Abstandshaltervorrichtungen mit nur einem Satz an Streifen bedürfen ggf. gesonderten Schutz.

In einer weiteren Ausführungsvariante kann die Abstandshaltervorrichtung wenigstens ein an dem Zentralkörper angeordnetes, sich in Längsrichtung des Zentralkörpers erstreckenden Luftkissen umfassen, welches über eine Druckluftzufuhr wahlweise aufblasbar und entlüftbar ist. Durch Druckluftzufuhr kann das wenigstens eine Luftkissen ausgehend vom Zentralkörper radial nach außen hin expandiert werden, bspw. bis es an der Innenwand eines zu untersuchenden technischen Gegenstandes anliegt. Durch Ablassen oder Absaugen der Luft im Luftkissen, wofür die Druckluftzufuhr geeignet weitergebildet oder ein gesonderter Druckluftablass vorgesehen sein kann, kann die radiale Erstreckung wieder reduziert werden. Da sich das wenigstens eine Luftkissen weiterhin in Längsrichtung des Zentralkörpers erstreckt, kann eine Abstützung in den erfindungsgemäß vorgesehenen zwei Abstützebenen bereits durch die Längserstreckung des wenigstens einen Luftkissens bewerkstelligt werden. Die Druckluftzufuhr kann bei einer Verwendung der Zentrierungshilfe mit einem Boroskop bspw. eine entlang des Boroskopschaftes geführte Druckluftleitung sein, über die bei Bedarf auf eine Entlüftung des Luftkissens möglich ist.

Bei dem wenigstens einen Luftkissen kann es sich um ein einzelnes ringförmig um den Zentralkörper erstreckendes Luftkissen handeln. Es ist aber auch möglich, zwei oder mehr über den Umfang verteilte Luftkissen vorzusehen, was regelmäßig eine einfachere Formgebung der Luftkissen ermöglicht.

Es ist besonders bevorzugt, wenn die mehreren Luftkissen individuell aufblasbar und entlüftbar sind. Durch gesteuertes individuelles Aufblasen und Entlüften kann die Position und/oder Ausrichtung eines Boroskopkopfes gegenüber der Innenwand eines technischen Gegenstandes, an dem die Luftkissen anliegen, noch planvoll verändert werden. Die Positioner- und/oder Ausrichtbarkeit erhöht sich dabei grundsätzlich mit der Anzahl der über den Umfang verteilten Luftkissen, wobei sich vier oder acht Luftkissen für die Steuerbarkeit der Position und/oder Ausrichtung regelmäßig ausreichend sind. Gleichzeitig sind die Steuerung sowie die für die Steuerbarkeit erforderliche Anzahl an Ventilen und/oder Zuleitungen noch gut handhabbar und in dem grundsätzlich begrenzten zur Verfügung stehenden Bauraum gut realisierbar.

Das wenigstens eine Luftkissen kann aus hochelastischem und/oder temperaturbeständigem Material, vorzugsweise Dehnungen über 2000 % und/oder Temperaturen bis 80 °C erlaubend, und/oder auf einen Innendruck von 0,5 bis 5 bar ausgelegt sein. Materialien mit entsprechenden Eigenschaften sind bekannt und haben sich als gut geeignet für Luftkissen der Abstandshaltervorrichtung erwiesen.

In einer erfindungsgemäßen Ausführungsvariante weist die Abstandshaltervorrichtung über den Umfang des Zentralkörpers verteilte, sich radial erstreckende, flexible Borsten auf. Die Borsten können mit ihren Spitzen an einer Innenwand eines Innenraums eines zu inspizierenden technischen Gegenstands anliegen und den Zentralkörper so abstützen. Die Länge der Borsten kann dabei auf den vorgesehenen Verwendungszweck eines mit der Zentrierungshilfe ausgestatteten Boroskops - insbesondere also auf den Innenraum eines technischen Gerätes, in welchen das Boroskop eingeführt werden soll - angepasst werden.

Die Borsten können dabei so flexibel ausgestaltet werden, dass sich ein mit einer entsprechenden Zentrierungshilfe versehenes Boroskop weiterhin durch die vorgesehenen Boroskopöffnung in einen technischen Gegenstand einbringen lässt. Die Borsten müssen sich in diesem Fall also ausreichend zum an den Zentralkörper hin elastisch verformen bzw. verbiegen lassen, ohne dadurch beschädigt zu werden.

Insbesondere für den Fall, dass dies allein durch entsprechende Flexibilität der Borsten nicht erreicht werden kann oder die erreichbare Abstützung durch entsprechend flexible Borsten nicht ausreichend ist, ist ein einer erfindungsgemäßen Ausführungsvariante vorgesehen, dass wenigstens ein Teil der flexiblen Borsten derart federnd am Zentralkörper gelagert sind, dass eine entsprechende Borste um eine Achse senkrecht zur Längsrichtung des Zentralkörpers verschwenkbar ist. Durch eine solche Verschwenkbarkeit kann ein enges Anliegen der fraglichen Borsten an dem Zentralkörper, bspw. bei Hindurchschieben durch eine Boroskopöffnung, erreicht werden, ohne dass es hierfür auf die Flexibilität der Borsten selbst ankommt. Durch geeignete Abstimmung der Flexibilität der Borsten sowie der Federkraft deren federnder Lagerung lässt sich eine gute Abstützung im Innern eines technischen Gegenstandes erreichen, ohne diesen zu beschädigen, wobei die Zentrierungshilfe aufgrund der federnden Lagerung der Borsten weiterhin durch eine im Regelfall enge Boroskopöffnung hindurchgeführt werden kann.

Unabhängig von der Ausgestaltung der Abstandshaltervorrichtung ist es bevorzugt, wenn der Zentralkörper in Längsrichtung flexibel biegsam ist. Durch eine entsprechende flexible Ausgestaltung kann die Zentrierungshilfe auch durch enge, nicht geradlinig verlaufende Hohlräume hindurchbewegt werden. Die Abstützebenen verlaufen dann senkrecht zur Längsrichtung des Zentralkörpers am jeweiligen Schnittpunkt mit der jeweiligen Abstützebene.

Zur Erläuterung der erfindungsgemäßen Anordnung wird auf die vorstehenden Ausführungen verwiesen.

Grundsätzlich ist es bei der Verwendung der Zentrierungshilfe möglich, dass der Boroskopschaft als Ganzes durch den Durchführungskanal wird. Es ist aber bevorzugt, wenn der Boroskopschaft bündig mit der Zentrierungshilfe abschließt, sodass lediglich die Boroskopleitungen durch den Durchführungskanal zu einem auf der gegenüberliegenden Seite der Zentrierungshilfe angeordneten Boroskopkopf geführt sind. Der Durchführungskanal und damit in der Regel auch die Zentrierungshilfe können dann einen geringeren Durchmesser aufweisen, als bei Durchführung des Boroskopschaftes durch den Durchführungskanal erforderlich wäre.

Bevorzugt ist es, wenn der Querschnitt des Zentralkörpers senkrecht zum Durchführungskanal kleiner gleich dem Querschnitt des Boroskopkopfes ist. Durch eine entsprechende Ausgestaltung kann regelmäßig sichergestellt werden, dass die erfindungsgemäße Anordnung durch diejenigen Boroskopöffnungen geführt werden kann, für die das Boroskop grundsätzlich ausgelegt ist. Bei der Ermittlung einer geeigneten Querschnittgröße für den Zentralkörper ist ggf. die minimale radiale Ausdehnung der Abstandshaltervorrichtung zu berücksichtigen, sofern diese auch in diesem Zustand aus dem Zentralkörper hervorsteht.

Die Erfindung wird nun anhand von vorteilhaften Ausführungsformen unter Bezugnahme auf die beigefügten Zeichnungen beispielhaft beschrieben. Es zeigen:
- Figur 1a, b:: ein erstes Ausführungsbeispiel einer Zentrierungshilfe;
- Figur 2a, b:: ein zweites Ausführungsbeispiel einer Zentrierungshilfe;
- Figur 3a, b:: ein drittes Ausführungsbeispiel einer Zentrierungshilfe;
- Figur 4a, b:: ein Ausführungsbeispiel einer Anordnung umfassend eine Zentrierungshilfe gemäß Figur 3a, b.
- Figur 5a, b:: ein viertes Ausführungsbeispiel einer Zentrierungshilfe;
- Figur 6a, b:: ein fünftes Ausführungsbeispiel einer Zentrierungshilfe;

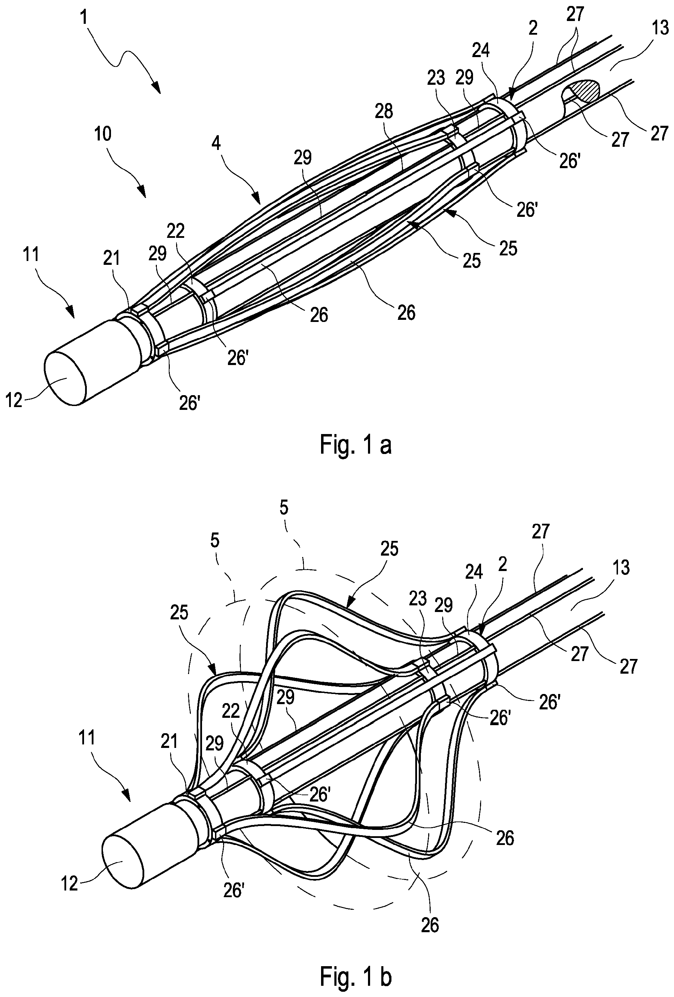

In Figur 1 ist ein erstes Ausführungsbeispiel einer Zentrierungshilfe 1 in einer Anordnung 10 mit einem Boroskop 11 schematisch dargestellt. Dabei zeigen die Figuren 1a und b die Anordnung 10 in unterschiedlichen Zuständen der Zentrierungshilfe 1.

Das Boroskop 11 umfasst einem Boroskopkopf 12, der auf einem flexiblen Schaft 13 angeordnet ist, in dem die diversen Boroskopleitungen (nicht dargestellt) verlaufen. Die Zentrierungshilfe 1 ist unmittelbar benachbart zum Boroskopkopf 12 auf dem Boroskopschaft 13 angeordnet.

Die Zentrierungshilfe 1 umfasst einen in vier ringförmige, in Längsrichtung voneinander beabstandete Teile 21-24 aufgeteilten Zentralkörper 2, wobei die beiden dem Boroskopkopf 12 nächstliegenden ringförmigen Teile 21, 22 fest an dem Boroskopschaft 13 - durch Kraftschluss und/oder Stoffschluss - befestigt sind, während die beiden anderen ringförmigen Teile 23, 24 entlang des Boroskopschafts 13 verschiebbar sind. Die ringförmigen Teile 21-24 bilden einen Durchgangskanal 3, durch den der Boroskopschafts 13 geführt ist.

Als Abstandshaltervorrichtung 4 sind jeweils ein unverschieblicher und ein verschieblicher Teil 21, 23 bzw. 22, 24 des Zentralkörpers 2 je über einen Satz 25 von jeweils vier, gleichmäßig über den Umfang verteilten, elastisch verformbaren Streifen 26 an sog. Führungspunkten 26' fest verbunden. Die Streifen 26 weisen jeweils einen rechteckigen Querschnitt auf, wobei die geringere Seitenlänge in im wesentlichen radialer Richtung zum Zentralköper 2 verläuft. Der Abstand zwischen den jeweils über einen Satz 25 von Streifen 26 verbundenen Teil 21, 23 bzw. 22, 24 des Zentralkörpers 2 ist in dem in Figur 1a dargestellten vollständig entspannten Zustand so gewählt, dass die Streifen 26 leicht nach außen gewölbt sind.

Über den Umfang des Zentralköpers 2 verteilt sind insgesamt vier Bowdenzüge 27 vorgesehen, die entlang des Schafts 13 zu dessen entferntem Ende (nicht dargestellt) geführt sind. Das eine Ende der innen liegenden Zugdrähte 28 ist an dem, dem Boroskopkopf 12 nächstliegenden Teil 21 des Zentralkörpers 1 befestigt. Darüber hinaus sind die Zugdrähte 28 der Bowdenzüge 27 in den Bereichen zwischen den Teilen 21-24 des Zentralkörpers 2 in Abstandshaltern 29 geführt, wobei die Abstandshalter 29 zwischen den beiden feststehenden Teilen 21, 22 bzw. den beiden verschiebbaren Teilen 23, 24 jeweils bündig mit diesen abschließen oder sogar einstückig mit den entsprechenden Teilen 21-24 ausgebildet sind. Die Abstandshalter 29 zwischen den beiden innen liegenden Teilen 22, 23 des Zentralkörpers 2 sind jedoch kürzer als der Abstand zwischen diesen Teilen 22, 23 im in Figur 1a dargestellten Zustand. Durch Zug an den Bowdenzügen 27 kann dieser Abstand verändern, insbesondere verringert werden, wobei ein ungleichmäßiges Ziehen an den Bowdenzügen 27 bei einem flexiblen Boroskopschaft 13 zusätzlich noch eine Biegung des Schafts 13 im Bereich der Zentrierungshilfe 1 und somit eine Ausrichtbarkeit des Boroskopkopfes 12 ermöglicht.

In Figur 1b ist die Anordnung 1 bzw. die Zentrierungshilfe 1 in dem Zustand dargestellt, der sich bei gleichmäßigem Zug an allen Bowdenzügen 27 ergibt, mit dem der Abstand zwischen den beiden innen liegenden Teilen 22, 23 des Zentralkörpers 2 auf den durch die dazwischen angeordneten Abstandshalter 29 vorgegebenen Abstand reduziert sind.

Aufgrund der beschriebenen Ausgestaltung des Zentralkörpers 2 und der Abstandshalter 29 reduziert sich dabei jeweils der Abstand der durch einen Satz 25 an Streifen 26 verbundenen Teile 21, 23 bzw. 22, 24 des Zentralkörpers und somit der Abstand zwischen den beiden Führungspunkten 26' eines jeden Streifens. Da die Länge der Streifen 26 zwischen den beiden Führungspunkten 26' jeweils konstant bleibt (womit sich also das Verhältnis aus dem Abstand der Führungspunkte 26' und der Länge der Streifen 26 zwischen den Führungspunkten 26' ändert), kommt es zu einem Biegeknicken der Streifen 26 vergleichbar dem vierten eulerschen Knickfall. Aufgrund der Vorwölbung der Streifen 26 (vgl. Figur 1a), deren rechteckigen Querschnitt, sowie des durch den Durchführungskanal 3 geführten Boroskopschafts 13 als Sperre erfolgt eine Expansion der Streifen 26 und somit der Abstandshaltervorrichtung 4 nach Außen. Indem die beiden Sätze 25 an Streifen 26 aufgrund der Abstandshalter 29 zwischen den jeweiligen Teilen 21, 22 bzw. 23, 24 des Zentralkörpers 2, an denen sich die Führungspunkte 26' der Streifen 26 befinden, in Längsrichtung des Zentralkörpers 2 versetzt angeordnet sind, sind auch die Punkte der maximalen radialen Ausdehnung der Streifen 26 der beiden Sätze 25 in die genannte Längsrichtung versetzt. Es ergibt sich so die Möglichkeit der Abstützung in zwei beabstandeten Abstützebenen 5.

Die Streifen 26 sind aus derart elastisch verformbarem Kunststoff, dass sich die Zentrierungshilfe 1 ausgehend von dem in Figur 1b gezeigten Zustand bei vollständigem Lösen der Bowdenzüge 27 wieder in die in Figur 1a gezeigte Ausgangsposition zurückbewegt.

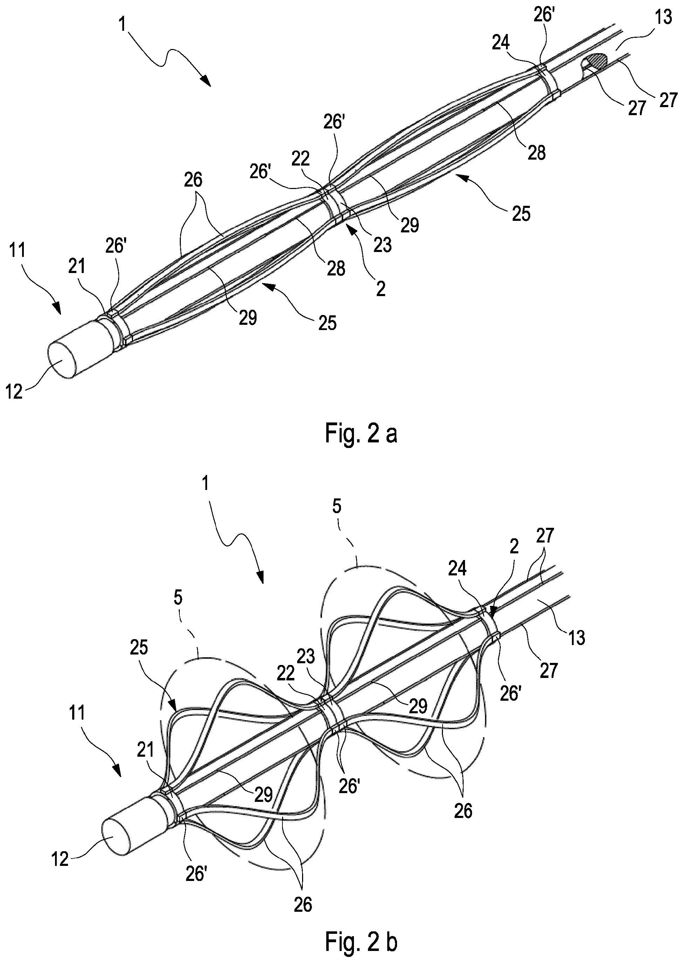

In Figur 2 ist ein zweites Ausführungsbeispiele einer Zentrierungshilfe 1 dargestellt, die grundsätzlich ähnlich zu dem Ausführungsbeispiel aus Figur 1 aufgebaut und angeordnet ist, weshalb die vorstehenden Erläuterungen in weiten Teilen gültig bleiben.

Auch die Zentrierungshilfe 1 gemäß Figur 2 umfasst einen in vier ringförmige, in Längsrichtung voneinander beabstandete Teile 21-24 aufgeteilten Zentralkörper 2, wobei jedoch nur der dem Boroskopkopf 12 nächstliegenden ringförmigen Teil 21 fest an dem Boroskopschaft 13 - durch Kraftschluss und/oder Stoffschluss - befestigt ist, während die anderen ringförmigen Teile 22, 23, 24 entlang des Boroskopschafts 13 verschiebbar sind. Die ringförmigen Teile 21-24 bilden einen Durchgangskanal 3, durch den der Boroskopschafts 13 geführt ist.

Als Abstandshaltervorrichtung 4 sind zwei Sätze 25 von jeweils vier, gleichmäßig über den Umfang verteilten, elastisch verformbaren Streifen 26 vorgesehen, die jeweils einen rechteckigen Querschnitt aufweisen, wobei die geringere Seitenlänge in praktisch radialer Richtung zum Zentralköper 2 verläuft. Mit dem ersten Satz 25 an Streifen 26 sind die beiden Teile 21, 22 des Zentralkörpers 2 miteinander verbunden, d. h. die Führungspunkte 26' der fraglichen Streifen 26 sind an den beiden Teilen 21, 22 angeordnet. Der zweite Satz 25 an Streifen 26 verbindet in analoger Weise die Teile 23, 24. Dabei sind die Streifen 26 der beiden Sätze 25 jeweils einstückig mit den durch sie verbundenen Teilen 21, 22 bzw. 23, 24 des Zentralkörpers 2 ausgebildet. Insbesondere wenn das Teil 21 des Zentralkörpers 2 per Stoffschluss an dem Boroskopschaft 13 befes tigt ist, können die beiden Sätze 25 an Streifen mit dem jeweiligen Teilen 12-24 vollständig identisch zueinander aufgebaut sein, was die Fertigung der Zentrierungshilfe 1 insgesamt vereinfacht.

Über den Umfang des Zentralköpers 2 verteilt sind insgesamt vier Bowdenzüge 27 vorgesehen, die entlang des Schafts 13 zu dessen entferntem Ende (nicht dargestellt) geführt sind. Das eine Ende der innen liegenden Zugdrähte 28 ist an dem, dem Boroskopkopf 12 nächstliegenden Teil 21 des Zentralkörpers 1 befestigt. Darüber hinaus sind die Zugdrähte 28 der Bowdenzüge 27 in den Bereichen zwischen den Teilen 21, 22 bzw. 23, 24 des Zentralkörpers 2 in Abstandshaltern 29 geführt, wobei die Abstandshalter 29 grundsätzlich kürzer sind als der Abstand zwischen diesen Teilen 21, 22 bzw. 23, 24 im in Figur 2a dargestellten Zustand. Durch Zug an den Bowdenzügen 27 kann dieser Abstand verändern, insbesondere verringert werden, wobei ein ungleichmäßiges Ziehen an den Bowdenzügen 27 bei einem flexiblen Boroskopschaft 13 zusätzlich noch eine Biegung des Schafts 13 im Bereich der Zentrierungshilfe 1 und somit eine Ausrichtbarkeit des Boroskopkopfes 12 ermöglicht.

In Figur 2b ist die Anordnung 1 bzw. die Zentrierungshilfe 1 in dem Zustand dargestellt, der sich bei gleichmäßigem Zug an allen Bowdenzügen 27 ergibt, wodurch der Abstand zwischen den beiden äußeren Teilen 21, 24 des Zentralkörpers verringert wird. Bereits aufgrund der elastischen Verformung der Streifen 26, spätestens aber aufgrund der Abstandshalter 29 sowie der Verschiebbarkeit der beiden Teile 22, 23 werden auch diese Teile 22, 23 so verschoben, dass sich die Abstände zwischen den Führungspunkten 26' der einzelnen Streifen 26 derart verringern, dass sie, wie dargestellt, alle nach außen expandiert sind. Da die Länge der Streifen 26 zwischen den beiden Führungspunkten 26' jeweils konstant bleibt (womit sich also das Verhältnis aus dem Abstand der Führungspunkte 26' und der Länge der Streifen 26 zwischen den Führungspunkten 26' ändert), kommt es nämlich auch hier zu einem Biegeknicken der Streifen 26 vergleichbar dem vierten eulerschen Knickfall. Aufgrund der Vorwölbung der Streifen 26 (vgl. Figur 2a), deren rechteckigen Querschnitt, sowie des durch den Durchführungskanal 3 geführten Boroskopschafts 13 als Sperre erfolgt eine Expansion der Streifen 26 und somit der Abstandshaltervorrichtung 4 nach Außen.

Indem die beiden Sätze 25 an Streifen 26 in Längsrichtung des Boroskopschaftes 13 hintereinander angeordnet sind, sind auch die Punkte der maximalen radialen Ausdehnung der Streifen 26 der beiden Sätze 25 in die genannte Längsrichtung versetzt. Es ergibt sich so die Möglichkeit der Abstützung in zwei beabstandeten Abstützebenen 5.

Die Streifen 26 sind aus derart elastisch verformbarem Kunststoff, dass sich die Zentrierungshilfe 1 ausgehend von dem in Figur 2b gezeigten Zustand bei vollständigem Lösen der Bowdenzüge 27 wieder in die in Figur 2a gezeigte Ausgangsposition zurückbewegt.

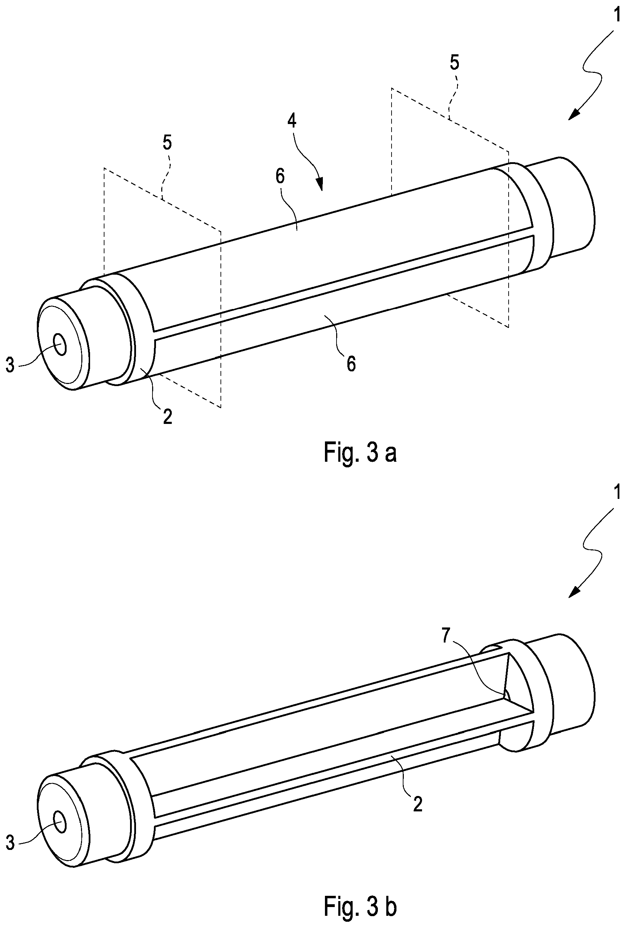

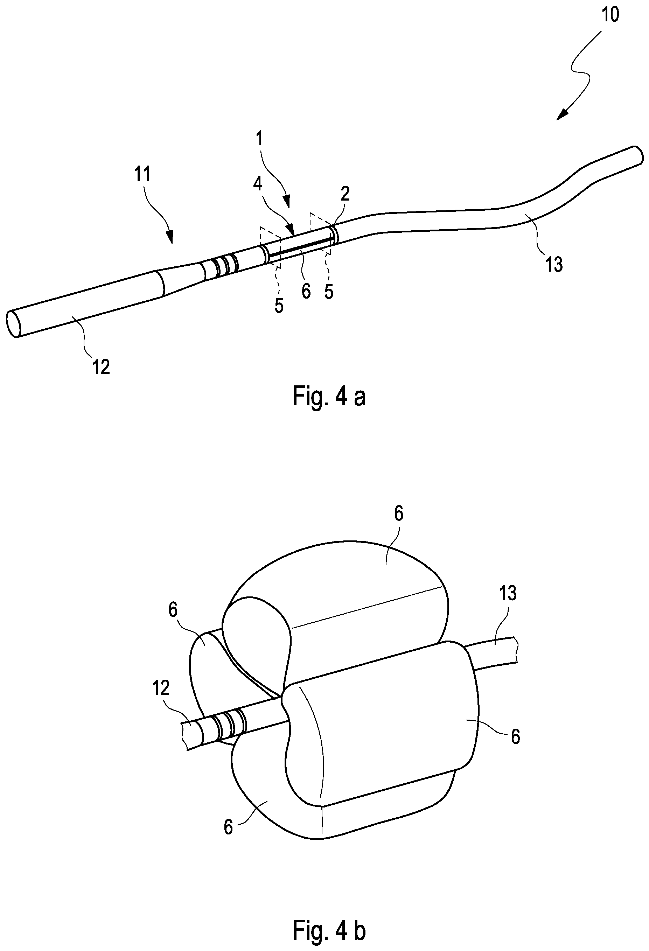

In Figur 3 ist ein drittes Ausführungsbeispiel einer Zentrierungshilfe 1 dargestellt, wobei in Figur 3a die Zentrierungshilfe 1 selbst, in Figur 3b lediglich der Zentralkörper 2 der Zentrierungshilfe 1 gezeigt ist. Die Zentrierungshilfe 1 gemäß Figur 3 ist auch Bestandteil der Anordnung 10 gemäß Figur 4, auf die ergänzend verwiesen wird.

Die Zentrierungshilfe 1 umfasst einen lang gestreckten Zentralkörper 2 mit einem Durchführungskanal 3, durch den im Verwendungszustand mit einem Boroskop 11 (vgl. Figur 4) die Boroskopleitungen zum Boroskopkopf 12 geführt werden können. An dem Zentralkörper 2 ist eine Abstandshaltervorrichtung 4 vorgesehen, deren Erstreckung in radialer Richtung variabel verändert werden kann, sodass die Abstandshaltervorrichtung 4 den Zentralkörper wenigstens in den beiden angedeuteten Abstützebenen 5, die senkrecht zur Längsrichtung des Zentralkörpers 2 verlaufen, abstützen können, bspw. gegenüber der Innenwand einen zu boroskopierenden Hohlraums eines technischen Gerätes, wie eines Flugzeugtriebwerks.

Bei dem Ausführungsbeispiel aus Figur 3 umfasst die Abstandshaltervorrichtung 4 vier über den Umfang des Zentralkörpers 2 verteilt angeordnete, sich in Längsrichtung des Zentralkörpers 2 erstreckenden Luftkissen 6 als individuell in radialer Richtung steuerbar nach außen expandierbare Komponenten. Zur Steuerung dieser radialen Expansion der Luftkissen 6 ist für jedes Luftkissen eine individuelle Druckluftzufuhr in Form eines Druckluftkanals 7 vorgesehen, über welchen mit daran angeschlossenen und durch den Boroskopschaft 13 geführten Druckluftleitungen wahlweise Druckluft eingebracht oder aus den Luftkissen 6 abgelassen werden kann. Die dafür erforderlichen Druckluftquelle und Steuerungsventile können am von der Zentrierungshilfe 1 entfernten Ende des Boroskopschaftes 13 angeordnet sein.

Die Luftkissen 6 sind jeweils aus einem hochelastischen und temperaturbeständigen Material gefertigt, das Dehnungen über 2000 % und Temperaturen bis 80 °C erlaubt. Die Luftkissen 6 sind auf Innendruck von max. 5 bar ausgelegt, bei dem sie ihre maximale Ausdehnung in radialer Richtung entfalten (vgl. Figur 2b).

In Figur 4 ist die Zentrierungshilfe 1 aus Figur 3 bei seiner Verwendung in einer Anordnung 10 gezeigt. Neben der Zentrierungshilfe 1 umfasst die Anordnung 10 noch ein Boroskop 11 mit einem Boroskopkopf 12 und einem flexiblen Boroskopschafts 13, in dem neben den Boroskopleitungen auch die bereits erwähnten Druckluftleitungen zur Druckluftzufuhr für die Luftkissen 6 der Zentrierungshilfe 1 verlaufen (nicht dargestellt). Der Boroskopkopf 12, der gemäß dem Stand der Technik ausgebildet ist, ist dabei an der einen Seite der Zentrierungshilfe 1 angeordnet, während der Boroskopschaft 13 bündig mit dem anderen Ende der Zentrierungshilfe 1 abschließt, sodass durch den Durchführungskanal 3 des Zentralkörpers 2 der Zentrierungshilfe lediglich die Boroskopleitungen geführt werden müssen.

In Figur 4a ist die Anordnung 10 bei vollständig entlüfteten Luftkissen 6 und somit "eingefahrener" Abstandshaltervorrichtung 4 dargestellt. In diesem Zustand ist der Querschnitt der Zentrierungshilfe 1 bzw. des diesen Querschnitt bestimmenden Zentralkörpers 2 senkrecht zum Durchführungskanal 3 kleiner als der Querschnitt des Boroskopkopfes 12.

In Figur 4b, welche eine Teildarstellung der Figur 4a zeigt, sind sämtliche vier Luftkissen 6 mit jeweils dem maximal zulässigen Druck von 5 bar beaufschlagt. Die Luftkissen 6 weisen damit ihre maximale radiale Erstreckung, insbesondere auch in den beiden Abstützebenen 5 (vgl. Figur 1a) auf. Durch die aufgeblasenen Luftkissen 6 kann der Zentralkörper 2 und somit auch der damit verbundene Boroskopkopf 12, wenn eingeführt in ein technisches Gerät, an der Innenwand eines Hohlraums des technischen Geräts abgestützt werden. Durch individuelle Steuerung der Druckluftzufuhr der einzelnen Luftkissen 6 ist die mit der Zentrierungshilfe erreichbare Position und/oder Ausrichtung des Zentralkörpers 2 bzw. Boroskopkopfes 12 auch noch in gewissen Grenzen einstellbar.

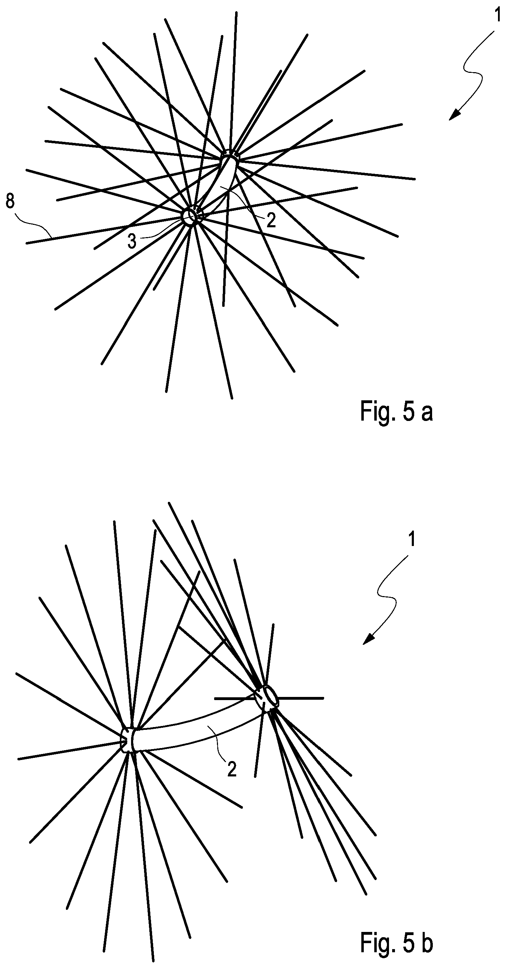

In Figur 5 ist ein viertes Ausführungsbeispiel einer Zentrierungshilfe 1 für Boroskope gezeigt.

Die Zentrierungshilfe 1 umfasst einen Zentralkörper 2, dessen Durchgangsöffnung 3 dazu ausgebildet ist, dass der Boroskopschaft 13 eines Boroskops 11 - und nicht nur die Boroskopleitungen (vgl. Figur 4a) - hindurchgeführt werden kann. Eine Anpassung des Boroskops 10 an die Verwendung mit dieser Zentrierungshilfe 1 ist dadurch in der Regel nicht erforderlich.

Der Zentralköper 2 ist weiterhin flexibel biegsam ausgestaltet, sodass ein darin eingeführtes Boroskop 11 mit flexiblem Boroskopschaft 13 auch im Bereich der Zentrierungshilfe 1 flexibel bleibt.

An beiden Enden des Zentralköpers 2 sind jeweils über den Umfang des Zentralkörpers 2 verteilte, sich radial erstreckende, flexible Borsten 8 vorgesehen. Die Borsten 8 bilden so jeweils eine Abstützebene an den jeweiligen Enden des Zentralköpers 2.

Die Borsten 8 sind dabei derart flexibel ausgestaltet, dass sich die Zentrierungshilfe 1 bzw. ein damit ausgestattetes Boroskop weiterhin durch eine dafür vorgesehene Boroskopöffnung in ein technisches Gerät eingeführt werden kann. Gleichzeitig sind sie ausrechend steif, um den Zentralkörper 2 bzw. ein durch dieses hindurchgeführte Boroskop gegenüber der Innenwand eines Hohlraums eines technischen Gerätes, in welche eine entsprechende Anordnung eingeführt ist, abzustützen.

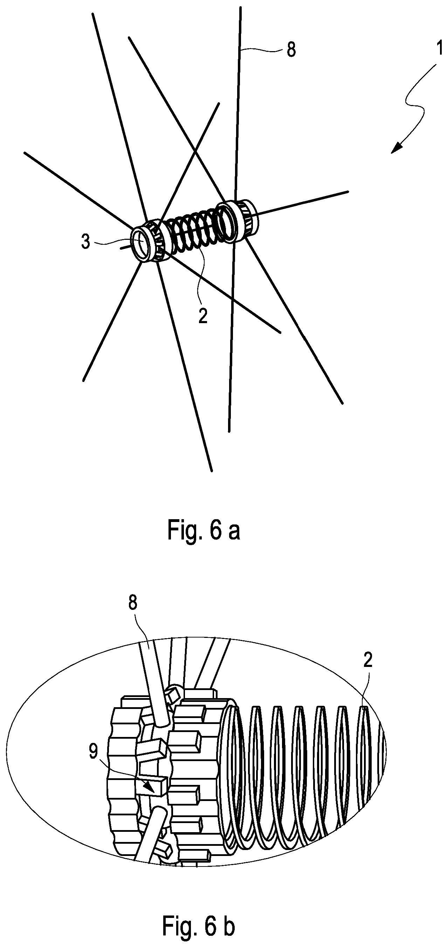

In Figur 6 ist eine Variante des Ausführungsbeispiels gemäß Figur 5 als fünftes Ausführungsbeispiel für eine Zentrierungshilfe 1 gezeigt. Es wird daher auf die vorstehenden Ausführungen verwiesen und im Folgenden lediglich auf die Unterschiede zwischen diesen beiden Ausführungsbeispielen eingegangen.

In dem Ausführungsbeispiel gemäß Figur 6 ist der Zentralkörper 2 der Zentrierungshilfe 1 als Schraubenfeder ausgestaltet, wodurch der Zentralkörper 2 zwar weiterhin in Längsrichtung biegsam ist, allerdings bei entsprechender Biegung auch wieder in die dargestellte gerade Form zurückdrängt.

Darüber hinaus sind die Borsten 8 über jeweils ein in der Detaildarstellung Figur 6b gezeigtes Gelenk 8 derart federnd am Zentralkörper 2 gelagert, dass die Borsten 8 jeweils um eine Achse senkrecht zur Längsrichtung des Zentralkörpers 2 verschwenkbar sind. Die Borsten 8 lassen sich so unmittelbar an den Zentralkörper 2 anlegen bzw. in eine Stellung parallel zur Längsrichtung des Zentralkörpers 2, aber davon wegweisend verschwenken, was ein Einführen der Zentrierungshilfe 1 bzw. eines damit ausgestatteten Boroskops durch eine Boroskopöffnung mit in der Regel geringem Durchmesser erleichtert. Aufgrund der federnden Ausgestaltung der Gelenke 8 werden die Borsten 8 aber grundsätzlich in die in Figur 6a gezeigte Position zurückgestellt.

## Patentansprüche

1. Zentrierungshilfe (1) für Boroskope umfassend einen lang gestreckten einteiligen oder mehrteiligen Zentralkörper (2) mit einem Durchführungskanal (3) für Boroskopleitungen und einer sich über den gesamten Umfang des Zentralkörpers (2) in radialer Richtung variabel erstreckenden Abstandshaltervorrichtung (4) zur Abstützung des Zentralkörpers (2) in wenigstens zwei entlang des Zentralkörpers (2) voneinander beabstandeten, jeweils senkrecht zur Längsrichtung des Zentralkörpers (2) verlaufenden Abstützebenen (5), wobei die Abstandshaltervorrichtung (4) über den Umfang des Zentralkörpers (2) verteilt sich in radialer Richtung variabel erstreckbare Komponenten aufweist, wobei die Komponenten an zwei in Längsrichtung des Zentralkörpers (2) beabstandeten Führungspunkten (26') geführte Streifen (26) wenigstens zweier in Längsrichtung des Zentralkörpers (2) versetzt angeordneter Sätze (25) von jeweils wenigstens drei über den Umfang verteilte elastisch verformbare Streifen (26) sind, die durch Änderung des Verhältnisses aus dem Abstand zwischen ihren jeweiligen beiden Führungspunkten (26') und ihrer jeweiligen Länge zwischen den beiden Führungspunkten (26') in radialer Richtung nach außen expandierbar sind und der Abstand zwischen zwei Teilen (21-24) des Zentralkörpers (2) durch Bowdenzüge (27) veränderbar ist, oder wobei die Komponenten flexible, zumindest teilweise federnd am Zentralkörper (2) gelagerte und um eine Achse senkrecht zur Längsrichtung des Zentralkörpers (2) verschwenkbare Borsten (8) sind.

2. Zentrierungshilfe nach Anspruch 1,
**dadurch gekennzeichnet, dass**
die variable Erstreckung der Abstandshaltervorrichtung (4) in radialer Richtung durch elastische Verformbarkeit von wenigstens einer sich radial erstreckenden Komponente der Abstandshaltervorrichtung (4) und/oder durch wenigstens eine in radialer Richtung steuerbar nach außen expandierbare Komponente sichergestellt ist.

3. Zentrierungshilfe nach einem der vorhergehenden Ansprüche,
**dadurch gekennzeichnet, dass**
wenigstens ein Streifen (26) durch Veränderung des Abstandes zwischen den beiden Führungspunkten (26') bei gleichbleibender Länge des Streifens (26) zwischen den Führungspunkten (26') in radialer Richtung nach außen expandierbar ist.

4. Zentrierungshilfe nach einem der vorhergehenden Ansprüche,
**dadurch gekennzeichnet, dass**
der Zentralkörper (2) in wenigstens zwei Teile (21-24) unterteilt ist, wobei der Abstand zwischen wenigstens zwei Teilen (21-24) des Zentralkörpers (2) entlang einer durch den Durchführungskanal (3) geführten Boroskopleitung (13) veränderbar ist, und wenigstens ein Streifen (26) fest an jeweils einem Führungspunkt (26') auf jeweils einem der beiden Teile (21-24) des Zentralkörpers (2) angebunden ist.

5. Zentrierungshilfe nach einem der vorhergehenden Ansprüche,
**dadurch gekennzeichnet, dass**
die wenigstens zwei Sätze (25) von Streifen (26) in Längsrichtung des Zentralkörpers (2) überschneidend oder vollständig hintereinander angeordnet sind.

6. Zentrierungshilfe nach einem der vorhergehenden Ansprüche,
**dadurch gekennzeichnet, dass**
die Streifen (26) eines Satzes (25) an ihrem jeweils ersten Führungspunkt (26') an einem ersten gemeinsamen Teil (21, 22) des Zentralkörpers (2) und an ihrem jeweils anderen Führungspunkt (26') an einem zweiten gemeinsamen Teil (23, 24) des Zentralkörpers (2) befestigt sind, wobei der erste Teil (21, 22) des Zentralkörpers (2) axial unverschieblich gegenüber einer durch den Durchführungskanal (3) eingeführten Boroskopleitung befestigbar ist und der zweite Teil (23, 24) des Zentralkörpers (2) axial verschieblich gegenüber einer durch den Durchführungskanal (3) eingeführten Boroskopleitung ausgebildet ist.

7. Zentrierungshilfe nach einem der vorhergehenden Ansprüche,
**dadurch gekennzeichnet, dass**
die ersten und/oder zweiten Teile (21-24) des Zentralkörpers (2) wenigstens teilweise einstückig ausgebildet und/oder Abstandselemente (29) zur Festlegung des minimalen Abstands der Teile (21-24) des Zentralkörpers (2) zueinander festgelegt sind.

8. Zentrierungshilfe nach einem der vorhergehenden Ansprüche,
**dadurch gekennzeichnet, dass**
wenigstens zwei über den Umfang verteilte, individuell betätigbare Bowdenzüge (27) vorgesehen sind.

9. Zentrierungshilfe nach einem der vorhergehenden Ansprüche,
**dadurch gekennzeichnet, dass**
der Zentralkörper (2) in Längsrichtung flexibel biegsam ist.

10. Anordnung (10) umfassend ein Boroskop (11) mit einem Boroskopkopf (12) an einem Ende eines Boroskopschafts (13), in dem Boroskopleitungen verlaufen, und eine unmittelbar benachbart zum Boroskopkopf (12) angeordnete Zentrierungshilfe (1) mit einem Durchführungskanal, durch den die Boroskopleitungen geführt sind, wobei die Zentrierungshilfe (1) ausgebildet ist mit einem lang gestreckten Zentralkörper (2) umfassend den Durchführungskanal, wobei der Zentralkörper (2) eine sich über den gesamten Umfang des Zentralkörpers (2) in radialer Richtung variabel erstreckende Abstandshaltervorrichtung (4) zur Abstützung des Zentralkörpers (2) in wenigstens zwei entlang des Zentralkörpers (2) voneinander beabstandeten, jeweils senkrecht zur Längsrichtung des Zentralkörpers (2) verlaufenden Abstützebenen umfasst, wobei die Abstandshaltervorrichtung (4) wenigstens ein an dem Zentralkörper (2) angeordnetes, sich in Längsrichtung des Zentralkörpers (2) erstreckendes Luftkissen (6) umfasst, welches über eine Druckluftzufuhr (11) wahlweise aufblasbar und entlüftbar ist, und wobei der Boroskopschaft (13) durch den Durchführungskanal (3) der Zentrierungshilfe (1) geführt ist und der Querschnitt des Zentralkörpers (1) senkrecht zum Durchführungskanal (3) kleiner gleich dem Querschnitt des Boroskopkopfes (12) ist, oder wobei die Zentrierungshilfe (1) nach einem der vorstehenden Ansprüche ausgebildet ist.

11. Anordnung nach Anspruch 10,
**dadurch gekennzeichnet, dass**
zwei oder mehr über den Umfang verteilte, vorzugsweise individuell aufblasbare und entlüftbare Luftkissen (6) vorgesehen sind.

12. Anordnung nach einem der Ansprüche 10 und 11,
**dadurch gekennzeichnet, dass**
das wenigstens eine Luftkissen (6) aus hochelastischem und/oder temperaturbeständigem Material, vorzugsweise Dehnungen über 2000 % und/oder Temperaturen bis 80 °C erlaubend, und/oder auf einen Innendruck von 0,5 bis 5 bar ausgelegt ist.

13. Anordnung nach Anspruch 10,
**dadurch gekennzeichnet, dass**
die Zentrierungshilfe (1) nach einem der Ansprüche 1 bis 9 ausgebildet ist und der Boroskopschaft (13) durch den Durchführungskanal (3) der Zentrierungshilfe (1) geführt ist oder bündig mit der Zentrierungshilfe (1) abschließend ist.

14. Anordnung nach Anspruch 10,
**dadurch gekennzeichnet, dass**
die Zentrierungshilfe (1) nach einem der Ansprüche 1 bis 9 ausgebildet ist und der Querschnitt des Zentralkörpers (1) senkrecht zum Durchführungskanal (3) kleiner gleich dem Querschnitt des Boroskopkopfes (12) ist.

## Claims

1. Centring aid (1) for borescopes, comprising an elongate central body (2) in one part or multiple parts with a passage channel (3) for borescope lines and with a spacer device (4), which extends variably in the radial direction over the entire circumference of the central body (2), for supporting the central body (2) in at least two support planes (5) which are mutually spaced apart along the central body (2) and run perpendicularly to the longitudinal direction of the central body (2), wherein the spacer device (4) has components which are distributed over the circumference of the central body (2) and are able to extend variably in the radial direction, wherein the components are strips (26), which are guided on two guide points (26') that are spaced apart in the longitudinal direction of the central body (2), of at least two sets (25), disposed so as to be offset in the longitudinal direction of the central body (2), of in each case at least three elastically deformable strips (26) distributed over the circumference, said strips being able to be expanded radially outwards by changing the ratio of the distance between their respective two guide points (26') and their respective length between the two guide points (26'), and the distance between two parts (21-24) of the central body (2) being variable by Bowden cables (27), or wherein the components are flexible bristles (8) which are at least partially mounted so as to be resilient on the central body (2) and pivotable about an axis perpendicular to the longitudinal direction of the central body (2).

2. Centring aid according to Claim 1,
**characterized in that**
the variable extent of the spacer device (4) in the radial direction is ensured by elastic deformability of at least one radially extending component of the spacer device (4) and/or by at least one component which can be expanded outwards in a radial direction in a controlled fashion.

3. Centring aid according to one of the preceding claims,
**characterized in that**
at least one strip (26) is able to be expanded radially outwards by changing the distance between the two guide points (26') while the length of the strip (26) between the guide points (26') remains the same.

4. Centring aid according to one of the preceding claims,
**characterized in that**
the central body (2) is divided into at least two parts (21-24), wherein the distance between at least two parts (21-24) of the central body (2) along a borescope line (13) routed through the passage channel (3) is variable, and at least one strip (26) is fixedly attached to a respective guide point (26') on a respective one of the two parts (21-24) of the central body (2).

5. Centring aid according to one of the preceding claims,
**characterized in that**
the at least two sets (25) of strips (26) are arranged overlapping or completely one behind the other in the longitudinal direction of the central body (2).

6. Centring aid according to one of the preceding claims,
**characterized in that**
the strips (26) of a set (25) at their respective first guide point (26') are attached to a first common part (21, 22) of the central body (2), and at their respective other guide point (26') to a second common part (23, 24) of the central body (2), wherein the first part (21, 22) of the central body (2) can be attached axially immovably to a borescope line inserted through the passage channel (3), and the second part (23, 24) of the central body (2) is designed to be axially displaceable relative to a borescope line inserted through the passage channel (3).

7. Centring aid according to one of the preceding claims,
**characterized in that**
the first and/or second parts (21-24) of the central body (2) are at least partially formed as one piece, and/or spacer elements (29) are provided for determining the minimum mutual spacing of the parts (21-24) of the central body (2).

8. Centring aid according to one of the preceding claims,
**characterized in that**
at least two individually actuatable Bowden cables (27) are provided which are distributed over the circumference.

9. Centring aid according to one of the preceding claims,
**characterized in that**
the central body (2) is flexural in the longitudinal direction.

10. Assembly (10) comprising a borescope (11) with a borescope head (12) at one one of a borescope shaft (13) in which borescope lines extend, and a centring aid (1) which is arranged directly adjacent to the borescope head (12) and has a passage channel by way of which the borescope lines are guided, wherein the centring aid (1) is formed with an elongate central body (2) comprising the passage channel, wherein the central body (2) has a spacer device (4), which extends variably in the radial direction over the entire circumference of the central body (2), for supporting the central body (2) in at least two support planes which are mutually spaced apart along the central body (2) and run perpendicularly to the longitudinal direction of the central body (2), wherein the spacer device (4) comprises at least one air cushion (6) which is arranged on the central body (2) and extends in the longitudinal direction of the central body (2) and which is optionally inflatable and deflatable via a compressed air supply (11), and wherein the borescope shaft (13) is guided through the passage channel (3) of the centring aid (1), and the cross section of the central body (1) perpendicular to the passage channel (3) is equal to or smaller than the cross section of the borescope head (12), or wherein the centring aid (1) is configured according to one of the preceding claims.

11. Assembly according to Claim 10,
**characterized in that**
two or more air cushions (6) are provided which are distributed over the circumference and are preferably individually inflatable and deflatable.

12. Assembly according to one of Claims 10 and 11,
**characterized in that**
the at least one air cushion (6) is made of highly elastic and/or temperature-resistant material, preferably allowing expansions of more than 2000% and/or temperatures up to 80°C, and/or an internal pressure of 0.5 to 5 bar.

13. Assembly according to Claim 10,
**characterized in that**
the centring aid (1) is configured according to one of Claims 1 to 9, and the borescope shaft (13) is guided through the passage channel (3) of the centring aid (1), or terminates flush with the centring aid (1).

14. Assembly according to Claim 10,
**characterized in that**
the centring aid (1) is configured according to one of Claims 1 to 9, and the cross section of the central body (1) perpendicular to the passage channel (3) is equal to or smaller than the cross section of the borescope head (12).

## Revendications

1. Système d'aide au centrage (1) pour un boroscope comprenant un corps central (2) allongé en une partie ou en plusieurs parties avec un canal de passage (3) pour des lignes de boroscope et un dispositif d'écartement (4) s'étendant de manière variable dans une direction radiale sur la totalité de la périphérie du corps central (2), destiné à soutenir le corps central (2) dans au moins deux plans de soutien (5) espacés l'un de l'autre le long du corps central (2), s'étendant chacun perpendiculairement à la direction longitudinale du corps central (2), le dispositif d'écartement (4) comportant selon une répartition sur la périphérie du corps central (2) des composants pouvant s'étendre de manière variable dans la direction radiale, les composants étant des bandes (26) guidées sur deux points de guidage (26') espacés dans le sens longitudinal du corps central (2) d'au moins deux ensembles (25) disposés de manière décalée dans le sens longitudinal du corps central (2) de chacun au moins trois bandes (26) élastiquement déformables réparties sur la périphérie, qui peuvent être expansées vers l'extérieur dans la direction radiale en modifiant le rapport entre la distance entre ses deux points de guidage (26') respectifs et sa longueur respective entre les deux points de guidage (26') et la distance entre deux parties (21 - 24) du corps central (2) pouvant être modifiée par des câbles Bowden (27), ou les composants étant des poils (8) flexibles, montés au moins en partie sur ressorts sur le corps central (2) et pouvant pivoter autour d'un axe perpendiculairement au sens longitudinal du corps central (2).

2. Système d'aide au centrage selon la revendication 1,
**caractérisé en ce que**
l'extension variable du dispositif d'écartement (4) dans la direction radiale est assurée par une déformabilité élastique d'au moins un composant s'étendant radialement du dispositif d'écartement (4) et/ou par au moins un composant pouvant être expansé vers l'extérieur par une commande dans la direction radiale.

3. Système d'aide au centrage selon l'une des revendications précédentes,
**caractérisé en ce que**
au moins une bande (26) peut être expansée vers l'extérieur dans la direction radiale par modification de la distance entre les deux points de guidage (26') pour une longueur constante de la bande (26) entre les points de guidage (26').

4. Système d'aide au centrage selon l'une des revendications précédentes,
**caractérisé en ce que**
le corps central (2) est divisé en au moins deux parties (21 - 24), la distance entre au moins deux parties (21 - 24) du corps central (2) pouvant être modifiée le long d'une ligne (13) de boroscope guidée à travers le canal de passage (3), et au moins une bande (26) étant attachée fixement à respectivement un point de guidage (26') sur respectivement une des deux parties (21 - 24) du corps central (2).

5. Système d'aide au centrage selon l'une des revendications précédentes,
**caractérisé en ce que**
les au moins deux ensembles (25) de bandes (26) sont disposés par chevauchement dans le sens longitudinal du corps central (2) ou totalement l'un derrière l'autre.

6. Système d'aide au centrage selon l'une des revendications précédentes,
**caractérisé en ce que**
les bandes (26) d'un ensemble (25) sont fixées sur leur premier point de guidage (26') respectivement sur une première partie (21, 22) commune du corps central (2) et sur leur autre point de guidage (26') respectivement sur une deuxième partie commune (23, 24) du corps central (2), la première partie (21, 22) du corps central (2) pouvant être fixée de manière immobile axialement par rapport à une ligne de boroscope introduite à travers le canal de passage (3) et la deuxième partie (23, 24) du corps central (2) étant réalisée de manière axialement immobile par rapport à une ligne de boroscope introduite à travers le canal de passage (3).

7. Système d'aide au centrage selon l'une des revendications précédentes,
**caractérisé en ce que**
les première et/ou deuxième parties (21 - 24) du corps central (2) sont réalisées au moins en partie d'un seul tenant et/ou des éléments d'écartement (29) sont arrêtés pour arrêter la distance minimale des parties (21 - 24) du corps central (2) les unes par rapport aux autres.

8. Système d'aide au centrage selon l'une des revendications précédentes,
**caractérisé en ce que**
au moins deux câbles Bowden (27) répartis sur la périphérie, pouvant être actionnés individuellement sont prévus.

9. Système d'aide au centrage selon l'une des revendications précédentes,
**caractérisé en ce que**
le corps central (2) est souple et flexible dans le sens longitudinal.

10. Ensemble (10) comprenant un boroscope (11) avec une tête (12) de boroscope sur une extrémité d'une tige (13) de boroscope, dans laquelle des lignes de boroscope s'étendent, et un système d'aide au centrage (1) disposé de manière directement adjacente à la tête (12) de boroscope, avec un canal de passage, à travers lequel les lignes de boroscope sont guidées, le système d'aide au centrage (1) étant réalisé avec un corps central (2) allongé comprenant le canal de passage, le corps central (2) comprenant un dispositif d'écartement (4) s'étendant de manière variable dans la direction radiale sur la totalité de la périphérie du corps central (2), destiné à soutenir le corps central (2) dans au moins deux plans de soutien espacés l'un de l'autre le long du corps central (2), s'étendant respectivement perpendiculairement au sens longitudinal du corps central (2), le dispositif d'écartement (4) comprenant au moins un coussin d'air (6) disposé sur le corps central (2), s'étendant dans le sens longitudinal du corps central (2), lequel peut être gonflé et dégonflé au choix par une arrivée d'air comprimé (11), et la tige (13) de boroscope étant guidée à travers le canal de passage (3) du système d'aide au centrage (1) et la section transversale du corps central (1) étant perpendiculairement au canal de passage (3) inférieure ou égale à la section transversale de la tête (12) de boroscope, ou le système d'aide au centrage (1) étant réalisé selon l'une des revendications précédentes.

11. Ensemble selon la revendication 10,
**caractérisé en ce que**
deux ou plusieurs coussins d'air (6) gonflables ou dégonflables de préférence individuellement, répartis sur la périphérie sont prévus.

12. Ensemble selon l'une des revendications 10 et 11,
**caractérisé en ce que**
l'au moins un coussin d'air (6) en un matériau hautement élastique et/ou résistant aux températures, tolérant de préférence des dilatations supérieures à 2000 % et/ou des températures jusqu'à 80 °C, et/ou est conçu sur une pression intérieure de 0,5 à 5 bar.

13. Ensemble selon la revendication 10,
**caractérisé en ce que**
le système d'aide au centrage (1) est réalisé selon l'une des revendications 1 à 9 et la tige (13) de boroscope est guidée à travers le canal de passage (3) du système d'aide au centrage (1) ou se termine en affleurement avec le système d'aide au centrage (1).

14. Ensemble selon la revendication 10,
**caractérisé en ce que**
le système d'aide au centrage (1) est réalisé selon l'une des revendications 1 à 9 et la section transversale du corps central (1) est perpendiculairement au canal de passage (3) inférieure ou égale à la section transversale de la tête (12) de boroscope.
